# EUROPÄISCHE PATENTSCHRIFT

(11) **EP 2 316 686 B1**
(45) Veröffentlichungstag und Bekanntmachung des Hinweises auf die Patenterteilung: **26.09.2012**
(21) Anmeldenummer: 10188404.7
(22) Anmeldetag: 21.10.2010
(51) Int. Cl.: B60K 17/28, F16D 67/04

(54) **Getriebe**
Gearbox
Engrenage

(30) Priorität: 29.10.2009 DE 102009046178
(43) Veröffentlichungstag der Anmeldung: 04.05.2011
(73) Patentinhaber: Deere & Company, Moline, IL 61265-8098 (US)
(72) Erfinder: Vergara Martinez, Daniel, 28095, Madrid (ES)
(74) Vertreter: Reichert, Christian

(56) Entgegenhaltungen:
- EP-A1- 2 191 995
- EP-A2- 0 357 580
- EP-A2- 2 052 900
- FR-A1- 2 643 428
- GB-A- 2 277 358
- US-A- 3 698 524

## Beschreibung

Die Erfindung betrifft ein Getriebe, insbesondere Zapfwellengetriebe, mit einem Getriebegehäuse, einer im Getriebegehäuse gelagerten Welle und einer im Getriebegehäuse angeordneten Bremse zum Bremsen der Welle, wobei die Bremse einen ersten auf der Welle axial verschiebbar gelagerten Ringkolben und einen am Getriebegehäuse befestigten und mit einer begrenzten Freilaufeinrichtung versehenen Bremskörper umfasst.

Im Stand der Technik sind Getriebeanordnungen für Zapfwellengetriebe bekannt. Zapfwellengetriebe werden an landwirtschaftlichen Fahrzeugen, insbesondere Schlepper, eingesetzt und dienen dem Antrieb von Anbaugeräten oder Anhängegeräten, die an eine am Fahrzeug vorgesehene Anhängevorrichtung, insbesondere Dreipunktanhängevorrichtung, an das Fahrzeug angehängt bzw. angebaut werden können. Derartige Anhängevorrichtungen können je nach Anwendung und Ausbildung des Fahrzeugs sowohl heckseitig als auch frontseitig vorgesehen sein, somit werden auch Zapfwellengetriebe sowohl heckseitig als auch frontseitig am Fahrzeug vorgesehen. Der Antrieb für das Anbaugerät bzw. Anhängegerät erfolgt über eine Abtriebswelle des Zapfwellengetriebes, die über eine oder mehrere im Zapfwellengetriebe angeordnete Getriebestufen antreibbar ist und in Form einer Zapfwelle aus dem Getriebegehäuse des Zapfwellengetriebes herausragt, um mit dem entsprechenden Anbaugerät bzw. Anhängegerät verbunden zu werden. Die oben genannten Getriebeanordnungen weisen in der Regel eine Bremseinrichtung auf, die dazu dient, die Abtriebswelle (Zapfwelle) der Getriebeanordnung sowie den Antriebsstrang des entsprechenden Anbaugerätes bzw. Anhängegerätes abzubremsen bzw. festzustellen. Es ist beispielsweise eine Bremseinrichtungen bekannt, die einen auf der Abtriebswelle (Zapfwelle) drehfest angeordneten und axial verschiebbaren Ringkolben aufweist, der durch axiale Vorspannung, beispielsweise über Tellerfedern, mit einem am Getriebegehäuse befestigten Bremskörper in Eingriff gebracht wird, um die Abtriebswelle (Zapfwelle) der Getriebeanordnung bzw. den Antriebsstrang des entsprechenden Anbaugerätes bzw. Anhängegerätes abzubremsen bzw. festzustellen. An dem Ringkolben ist ein Druckraum ausgebildet, der es ermöglicht, den Ringkolben axial entgegen der Vorspannung von dem Bremskörper zu lösen. Gleichzeitig wird dabei der Ringkolben mit einer Kupplung in Eingriff gebracht, die die Abtriebswelle (Zapfwelle) mit dem Antriebsstrang des Getriebes verbindet. Im gebremsten Zustand, also wenn der Ringkolben und der Bremskörper miteinander in Eingriff stehen, ist die Welle gegenüber dem Getriebegehäuse festgestellt. Nun ist es jedoch im Interesse des Bedieners, dass die Abtriebswelle (Zapfwelle) auch im gebremsten Zustand zumindest in einem gewissen Umfang verdrehbar ist, damit die an der Abtriebswelle (Zapfwelle) ausgebildete Außenverzahnung mit der an der Antriebswelle des Anbaugerätes ausgebildeten Innenverzahnung in Übereinstimmung gebracht werden kann. Bei den üblicherweise vorliegenden Verzahnungsarten kann ein maximaler Verdrehwinkel von 60° notwendig sein, um die beiden genannten Wellen in Übereinstimmung zu bringen. Um dem gerecht zu werden sind Freilaufeinrichtungen bekannt, die ein Verdrehen des Bremskörpers im gebremsten Zustand von bis zu 60° Verdrehwinkel zulassen. Dies wird beispielsweise dadurch erreicht, dass der Bremskörper über Befestigungsbolzen bzw. -schrauben an das Gehäuse befestigt wird, wobei an dem Bremskörper auf den Umfang verteilte Führungsnuten ausgebildet sind, die auf den Befestigungsbolzen geführt werden. Die Führungsnuten erstrecken sich über einen bestimmten Umfangsbereich, beispielsweise über 60°. So kann der Bremskörper auch im gebremsten Zustand um ca. 60° verdreht werden. Der Freilauf wird dabei dadurch begrenzt, dass die Enden der Führungsnuten gegen die Befestigungsbolzen anschlagen, wodurch das Verdrehen des Bremskörpers begrenzt wird.

Nachteilig ist, dass eine oben beschriebene Bremseinrichtung mit einem relativ hohen Verschleiß verbunden ist, da ein Anschlagen der Enden der Führungsnuten an die Befestigungsbolzen oftmals mit einem hohen Bewegungsimpuls des Bremskörpers verbunden ist, was zu Deformierungen der Führungsnuten und/oder zur Zerstörung von Befestigungsbolzen führen kann.

Eine Getriebe nach dem Oberbegriff des Anspruchs 1 ist aus der GB 2 277 358 bekannt.

Die der Erfindung zugrunde liegende Aufgabe wird darin gesehen, ein Getriebe der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Getriebe der eingangs genannten Art derart ausgebildet, dass Mittel vorgesehen sind, durch die ein Rückstellmoment erzeugbar ist, das den Bremskörper gegenüber dem Getriebegehäuse in eine Ausgangsstellung drängt, sobald der Bremskörper innerhalb seines Freilaufs eine durch eine eingeleitete Verdrehbewegung von der Ausgangsstellung abweichende Verdrehstellung einnimmt. Die Ausgangsstellung entspricht dabei vorzugsweise einer Anschlagstellung des Bremskörpers, wenn also ein Ende der Führungsnut gegen einen der Befestigungsbolzen anschlägt bzw. mit diesem in Eingriff tritt. Sobald der Bremskörper aus seiner Ausgangsstellung bewegt wird, sei es durch Handkraft, durch ein Nachlaufen des Antriebsstrangs am Anbaugerät bei angekoppelter Abtriebswelle (Zapfwelle), oder auch durch einfache Drehbewegungen aus der Dynamik heraus, wird der Bremskörper durch ein auf ihn wirkendes Rückstellmoment in seine Ausgangsstellung zurückgedrängt. Der Bremskörper wird somit stets in seine Anschlagstellung gebracht und gehalten. Dadurch können die relativ hohen Bewegungs- oder Schlagimpulse vermieden werden, die durch Anschlagen der Enden der Führungsnuten an die Befestigungsbolzen beim Einleiten des Bremsvorgangs auftreten können.

Die Mittel können beispielsweise ein oder mehrere Federelemente umfassen, welche den Bremskörper entgegen der Verdrehbewegung in seine Ausgangsstellung drängen bzw. das Rückstellmoment erzeugen.

Das wenigstens eine Federelement kann beispielsweise als Torsionsfeder ausgebildet sein, die zwischen dem Bremskörper und dem Getriebegehäuse spannbar ist bzw. eingespannt ist, so dass durch Verdrehen des Bremskörpers gegenüber dem Getriebegehäuse eine zunehmende Federkraft der Verdrehbewegung entgegenwirkt. Die Torsionsfeder kann derart ausgebildet sein, dass nur wenige Federlagen vorgesehen sind. Die Torsionsfeder kann ferner durch die Befestigungsbolzen gehalten bzw. geführt werden und auf der innen liegenden Seite es Bremskörpers angeordnet sein, wobei ein Ende der Torsionsfeder am Getriebegehäuse und das andere Ende am Bremskörper befestigt ist. Die Torsionsfeder ist vorzugsweise derart bemessen, dass ein durch Verdrehen, also Spannen der Torsionsfeder hervorgerufenes Verdrehmoment bzw. Rückstellmoment durch Handkraft gehalten werden kann. Gleichfalls ist jedoch gewährleistet, dass das hervorgerufene Verdrehmoment bzw. Rückstellmoment den Bremskörper wieder zurück in seine Anschlagposition bewegt.

Alternativ kann an Stelle des Federelements auch eine Zusatzmasse am Bremskörper angeordnet sein, die den Schwerpunkt des Bremskörpers außerhalb seiner Verdrehachse bzw. Rotationssymmetrieachse verlagert und derart angeordnet ist, dass durch die Schwerpunktsverlagerung des an sich rotationssymmetrischen Bremskörpers ein den Bremskörper in seine Ausgangsstellung drängendes Verdrehmoment bzw. Rückstellmoment wirkt. Die Zusatzmasse kann beispielsweise in Form eines Gewichts oder eines Materials höherer Dichte als das des Bremskörpers in den Bremskörper eingefasst bzw. eingelassen sein. Wie oben erwähnt, ist der Einfass- bzw. Einlassbereich derart gewählt, dass ein durch die Zusatzmasse hervorgerufenes Rückstellmoment um die Rotationsachse den Bremskörper in seine Ausgangsstellung verdreht bzw. ihn in eine solche drängt bzw. ihn in einer solchen hält. Beispielsweise kann die Zusatzmasse als Bleigewicht ausgebildet sein.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Querschnittsansicht einer erfindungsgemäßen Getriebeanordnung und
- Fig. 2: eine schematische Teilansicht der Getriebeanordnung aus Figur 1.

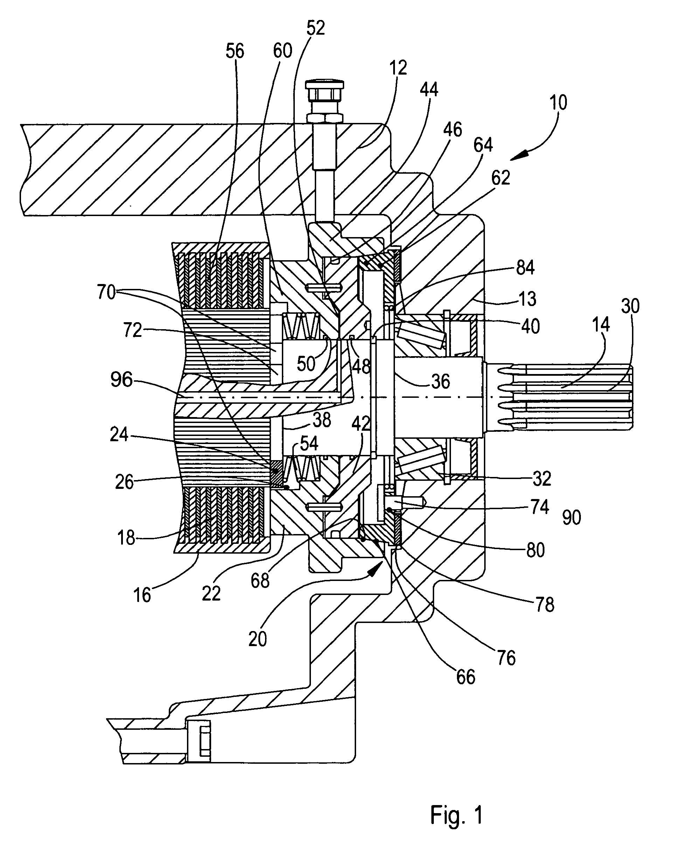

Eine in Figur 1 teilweise dargestellte Getriebeanordnung 10 für ein Zapfwellengetriebe, beispielsweise eines landwirtschaftlichen Schleppers, umfasst ein Getriebegehäuse 12 mit einer Getriebegehäusewand 13, eine als Zapfwelle ausgebildete Abtriebswelle 14, eine als Zahnradwelle (nicht gezeigt) ausgebildete Antriebskomponente 16, eine zwischen der Abtriebswelle 14 und der Antriebskomponente 16 angeordnete Kupplung 18, eine Bremseinrichtung 20 und einen zwischen Kupplung 18 und Bremseinrichtung 20 angeordneten Ringkolben 22.

Der Ringkolben 22 ist axial verschiebbar auf der Abtriebswelle 14 gelagert und über drei auf den Umfang verteilte Übertragungselemente 24 drehfest mit der Abtriebswelle 14 verbunden. Die Übertragungselemente 24 sind als Scheiben ausgebildet, welche in die Abtriebswelle 14 eingepasst sind und sich in entsprechende am Ringkolben 22 ausgebildete Aussparungen 26 erstrecken und dementsprechend als Drehmomentübertragung zwischen Ringkolben 22 und Abtriebswelle 14 dienen. Dabei sind die Aussparungen 26 derart ausgebildet, dass eine axiale Verschiebung des Ringkolbens 22 gegenüber der Abtriebswelle 14 zugelassen bzw. ermöglicht wird.

Die als Zapfwelle ausgebildete Abtriebswelle 14 weist an ihrem freiliegenden Ende eine Verzahnung 30 zum Antreiben eines Anbau- oder Anhängegerätes (nicht gezeigt) auf. Die Abtriebswelle 14 ist über ein erstes Lager 32 an der Getriebegehäusewand 13 gelagert. Ein zweites Lager (nicht gezeigt) dient zur Lagerung der Abtriebswelle 14 innerhalb des Getriebegehäuses 12. Die Abtriebswelle 14 ist mit einem ersten Absatz 36 und einem zweiten Absatz 38 versehen, wobei das erste Lager 32 an den ersten Absatz 36 anliegend angeordnet ist.

Zwischen dem ersten und dem zweiten Absatz 36, 38 ist eine über einen Sicherungsring 40 axial gesicherte kreisförmige Platte oder Scheibe 42 angeordnet, an die der auf der Abtriebswelle 14 axial verschiebbar gelagerte Ringkolben 22 angrenzt. An dem Ringkolben 22 ist ein sich axial in Richtung der Getriebegehäusewand 13 erstreckender Führungskranz 44 ausgebildet, der die Scheibe 42 radial umschließt und von dieser axial geführt wird. Zwischen dem Führungskranz 44 und der Scheibe 42 ist ein Dichtungsring 46 angeordnet, der die Scheibe 42 gegenüber dem Führungskranz 44 radial abdichtet. Zwischen der Abtriebswelle 14 und der Scheibe 42 ist ein weiterer Dichtungsring 48 angeordnet, der die Scheibe 42 gegenüber der Abtriebswelle 14 radial abdichtet. Die Scheibe 42 ist innerhalb des Führungskranzes 44 derart gelagert, dass sie eine axiale Relativbewegung gegenüber den Ringkolben 22 ausführen kann. Der Ringkolben 22 ist über einen weiteren Dichtungsring 50 gegenüber der Abtriebswelle 14 radial abgedichtet. Zwischen der Scheibe 42 und dem Ringkolben 22 ist eine Hydraulikkammer 52 ausgebildet, die durch eine dem Ringkolben 22 zugewandte Stirnfläche der Scheibe 42, durch eine der Scheibe 42 zugewandte Stirnfläche des Ringkolbens 22, durch die Umfangsfläche der Abtriebswelle 14 und durch die radial nach innen gerichtete Führungsfläche des Führungskranzes 44 begrenzt wird.

Wie in Figur 1 zu erkennen ist, ist der Ringkolben 22 zwischen der Scheibe 42 und dem zweiten Absatz 38 axial verschiebbar angeordnet. Zwischen dem Ringkolben 22 und dem zweiten Absatz 38 ist ein als Tellerfeder ausgebildetes Federelement 54 angeordnet, welches den Ringkolben 22 in Richtung der Scheibe 42 vorspannt bzw. den Ringkolben 22 gegen die Scheibe 42 drückt. Auf dem zweiten Absatz 38 sind Kupplungselemente 56 in Form von abtriebswellenseitigen und antriebskomponentenseitigen Lamellenscheiben angeordnet. An dem Ringkolben 22 ist ein sich axial in Richtung der Kupplungselemente 56 erstreckender Kranz 60 ausgebildet.

Die Bremseinrichtung 20 weist einen an die Getriebegehäusewand 13 befestigten Bremskörper 62 in Form eines Flanschs auf. Der Bremskörper 62 weist einen Bremskranz 64 auf, der einer radial nach innen gerichteten Seite des Führungskranzes 44 angrenzt. An dem Bremskranz 64 ist eine radial nach außen gerichtete erste Bremsfläche 66 ausgebildet. Die radial nach innen gerichtete Seite des Führungskranzes 44 ist mit einer zweiten Bremsfläche 68 versehen. Beide Bremsflächen 66, 68 sind leicht konisch ausgebildet, so dass sich durch axiale Verschiebung des Ringkolbens 22 gegenüber dem Flansch 62 ein Reibschluss zwischen den Bremsflächen 66, 68 einstellen bzw. unterbrochen werden kann.

Wie bereits erwähnt, sind die Übertragungselemente 24 als Scheiben ausgebildet, die über Ausnehmungen 70 an einer durch den zweiten Absatz 38 geformten Fläche 72 mit der Abtriebswelle 14 verbunden sind. Die Übertragungselemente 24 sind vorzugsweise fest in einem Presssitz in den Ausnehmungen 70 aufgenommen. Ein Teil der als Scheiben ausgebildeten Übertragungselemente 24 ragt radial über den Rand des zweiten Absatzes 38 hinaus, wobei die an dem Ringkolben 22 ausgebildeten Aussparungen 26 genau diesen Teil der Übertragungselemente 24 aufnehmen. Die Aussparungen 26 sind dabei an der radial innen liegenden Seite des Kranzes 60 ausgeformt und bilden im montierten Zustand einen radial und in Umfangsrichtung der Abtriebswelle 14 begrenzten Hohlraum, wobei die über den Rand des zweiten Absatzes 38 hinausragenden Teile der Übertragungselemente 24 in den Hohlraum hineinragen. Die Aussparungen 26 sind über einen Umfang von 60° symmetrisch angeordnet, wobei drei Aussparungen 26 vorgesehen sind, in die sich jeweils ein Übertragungselement 24 erstreckt. Insgesamt sind also drei über den Umfang verteilte Übertragungselemente 24 angeordnet. Die Anzahl der Übertragungselemente 24 bzw. der Aussparungen 26 kann variieren und ist in dem hier gezeigten Ausführungsbeispiel auf drei begrenzt. Die Übertragungselemente 24 treten in Umfangsrichtung mit den Wandungen des Hohlraums des Kranzes 60 in Eingriff, so dass zwischen Ringkolben 22 und Abtriebswelle 14 ein Kraftschluss in Umfangsrichtung hergestellt wird. Je nach Kraftschlussrichtung kann so ein Antriebsmoment von der Antriebskomponente 16 oder ein Bremsmoment bzw. Blockiermoment von der Bremseinrichtung 20 auf die Abtriebswelle 14 übertragen werden.

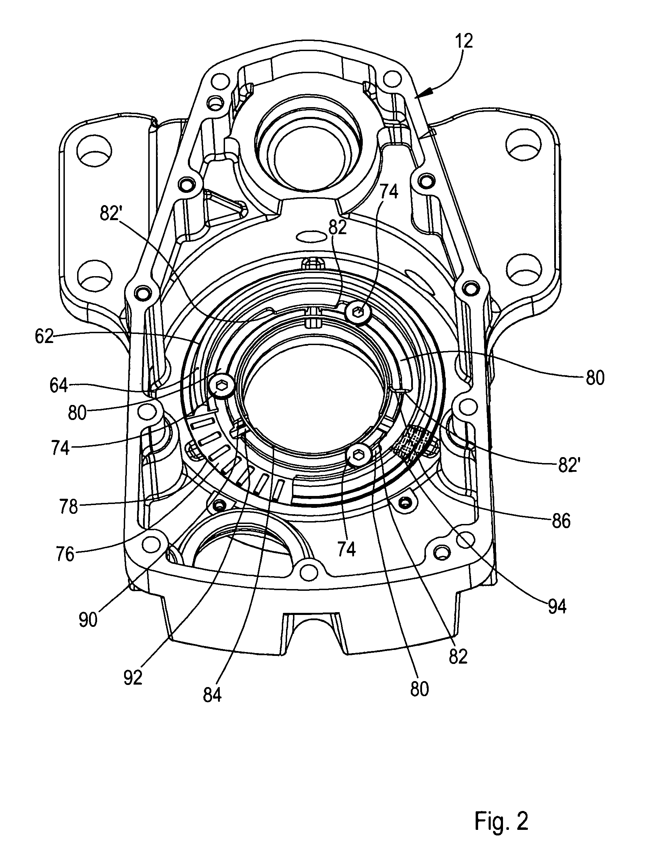

Wie insbesondere auch in Figur 2 zu erkennen ist, ist der Bremskörper 62 der Bremseinrichtung 20 über drei auf den Umfang verteilte Befestigungsbolzen 74 an das Getriebegehäuse 12 bzw. an die Getriebegehäusewand 13 befestigt. Die Befestigungsbolzen 74 sind dabei derart ausgebildet und angeordnet, dass ein axiales Bewegungsspiel zwischen Bremskörper 62 und Befestigungsbolzen 74 vorhanden ist. Ferner ist der Bremskörper 62 auf ein Axiallager 76 gelagert, so dass ein Verdrehen des Flansches 62 trotz Einwirkung von Axialkräften ermöglicht wird. Das Axiallager 76 ist seinerseits auf einer in der Getriebegehäusewand 13 eingepassten Ringnut 78 eingefasst.

Der Bremskörper 62 ist ferner mit einer in Umfangsrichtung beschränkten Freilaufeinrichtung versehen, so dass der Bremskörper 62 bzw. der Bremskranz 64 zwar als Bremsdrehmoment übertragende Komponente zwischen dem Ringkolben 22 und dem Getriebegehäuse 12 dient, darüber hinaus aber im blockierten Zustand der Abtriebswelle 14 ein beschränktes Verdrehen der Abtriebswelle 14 ermöglicht wird. Die Freilaufeinrichtung wird dadurch ausgebildet, dass, zur Befestigung und Führung des Bremskörpers 62, an dem Bremskörper 62, radial innenseitig ausgebildete Führungsnuten 80 vorgesehen sind, mit denen der Bremskörper 62 auf den Befestigungsbolzen 74 geführt wird. Die Führungsnuten erstrecken sich über einen Umfangsbereich von 60° und weisen Endbereiche 82, 82' auf, die mit den Befestigungsbolzen 74 bei entsprechendem Verdrehwinkel in Eingriff treten bzw. für die Befestigungsbolzen 74 einen Anschlag bilden. So kann der Bremskörper 62 auch im gebremsten Zustand über einen Umfangsbereich von ca. 60° verdreht werden. Der Freilauf wird somit dadurch begrenzt, dass die Enden bzw. Endbereiche 82 der Führungsnuten 80 gegen die Befestigungsbolzen 74 anschlagen bzw. umgekehrt, wodurch das weitere Verdrehen des Bremskörpers 62 begrenzt wird.

Im vorliegenden Ausführungsbeispiel sind drei Führungsnuten 80 auf den Umfang verteilt angeordnet. Sie erstrecken sich über ca. 60°. Sowohl die Anzahl der Führungsnuten 80, als auch der Erstreckungswinkel von 60° ist variierbar und kann je nach Bedarf und Anforderung anders gewählt werden. Die Abtriebswelle 14 kann in dem hier beschriebenen Ausführungsbeispiel im gebremsten Zustand in einem Freilaufbereich von ca. 60° in beide Drehrichtungen verdreht werden. Wenn die Befestigungsbolzen 74 an eines der Endbereiche 82 der Führungsnuten 80 gelangen bzw. stoßen, wird ein Kraftschluss bzw. ein Bremsmoment in Umfangsrichtung hergestellt bzw. der Bremskörper 62 in Umfangsrichtung blockiert. Die Abtriebswelle 14 kann nun wieder in entgegen gesetzte Richtung um 60° verdreht werden, bis die Befestigungsbolzen 74 gegen den anderen Endbereich 82' der Führungsnuten 80 stoßen. Der Freilaufbereich kann entsprechend der Ausbildung der Führungsnuten 80 (hier 60° Erstreckungswinkel auf den Umfang) variiert werden.

Um nun bei eintretender Bremsung des Bremskörpers 62 ein allzu impulsives Anschlagen der Endbereiche 82 der Führungsnuten 80 an die Führungsbolzen 74 zu vermeiden wird zwischen Bremskörper 62 und Getriebegehäusewand 13 ein als Torsionsfeder ausgebildetes Federelement 84 gespannt, das radial innen liegend zu den Befestigungsbolzen 74 angeordnet ist und von diesen umfangsmäßig gehaltert wird. Das Federelement 84 weist einen ersten Endbereich 86 auf, der mit einem Endbereich 82' einer der am Bremskörper 62 angeordneten Führungsnut 80 in Eingriff steht. Ferner weist das Federelement 84 einen zweiten Endbereich 90 auf, der mit einer an der Getriebegehäusewand 13 angeordneten Ausnehmung 92 in Eingriff steht. Das Federelement 84 ist derart eingespannt bzw. eingeordnet, dass gegenüber dem Getriebegehäuse 12 ein auf den Bremskörper 62 wirkendes Rückstellmoment erzeugt wird, welches den Bremskörper stets in eine Ausgangsstellung drängt, in der die Endbereiche 82 auf der einen Seite der Führungsnuten 80 mit den Befestigungsbolzen 74 in Eingriff treten bzw. in ihrer Anschlagposition stehen (in der in Figur 2 dargestellten Stellung befindet sich der Bremskörper 62 mit seinen Endbereichen 82 kurz vor dem Anschlag mit den Befestigungsbolzen 74). Das Federelement 84 dient somit als Rückstellmoment erzeugendes Mittel, durch welches der Bremskörper 62 in eine Ausgangsstellung gedrängt bzw. vorgespannt wird. Durch Verdrehen des Bremskörpers 62 innerhalb seines Freilaufs wird die Rückstellkraft erhöht, so dass mit zunehmendem Verdrehen des Bremskörpers 62 auch das Rückstellmoment ansteigt. Solange keine Verdrehkräfte an dem Bremskörper 62 wirken, wird dieser stets in seine Ausgangsstellung zurückgedrängt bzw. gehalten. Je nach Wahl der Richtung des zu übertragenden Antriebsmoments kann das Federelement 84 auch entgegengesetzt eingespannt werden, so dass das Rückstellmoment in die entgegen gesetzte Richtung wirkt und die Befestigungsbolzen 74 mit den anderen Endbereichen 82' in Anschlag stehen.

Die Funktionsweise der Getriebeanordnung 10 wird nun im Folgenden beschrieben.

Durch Befüllen der Hydraulikkammer 52 wird der Ringkolben 22 in Richtung der Kupplung 18 bewegt, wobei der Ringkolben 22 durch die Ausbildung des Kranzes 60 auf der der Kupplung zugewandten Seite als Kupplungskolben ausgebildet ist. Auf der der Bremseinrichtung 20 zugewandten Seite, ist der Ringkolben 22 durch die Ausbildung der Bremsfläche 68 als Bremskolben ausgebildet. Je nach Betätigung des Ringkolbens 22 können drei verschiedene Betriebszustände eintreten, ein Bremszustand bzw. Blockierzustand, ein Kupplungszustand und ein Leerlaufzustand. Der Bremszustand wird automatisch eingenommen, sobald die Hydraulikkammer 52 druckentlastet wird. Durch die Vorspannkraft des Federelements 54 wird der Ringkolben 22 in Richtung der Bremseinrichtung 20 gedrückt, so dass die Bremsflächen 66, 68 in Reibschluss treten und den Ringkolben gegenüber dem Getriebegehäuse 12 (gegebenenfalls nach Vollzug des Freilaufs in den Führungsnuten 80) abbremsen bzw. blockieren. In diesem Bremszustand ist der Ringkolben 22 und damit auch die drehfest mit dem Ringkolben 22 verbundene Abtriebswelle 14 blockiert. Wird die Hydraulikkammer 52 hingegen mit Hydraulikflüssigkeit befüllt bzw. druckbeaufschlagt, dann bewegt sich der Ringkolben 22 entgegen der Vorspannkraft des Federelements 54 in Richtung der Kupplung 18, so dass die Bremsflächen 66, 68 ihren Reibschluss auflösen. In diesem Zustand ist der Ringkolben 22 weder mit der Bremseinrichtung 20 noch mit der Kupplung 18 verbunden, so dass der Ringkolben 22 frei drehbar gelagert ist. Damit ist auch die Abtriebswelle 14 frei drehbar und befindet sich in einem Leerlaufzustand. Dieser Leerlaufzustand wird verlassen, sobald der Ringkolben 22 durch weiteres Befüllen der Hydraulikkammer 52 bzw. durch weitere Druckbeaufschlagung weiter in Richtung der Kupplung 18 bewegt wird und der an dem Ringkolben 22 ausgebildete Kranz 60 mit den Kupplungselementen 56 in Eingriff tritt und diese zusammen drückt, so dass ein Kupplungsreibschluss zwischen den abtriebswellenseitigen und den antriebskomponentenseitigen Lammellenscheiben eintritt. In diesem Kupplungszustand können Drehmomente von der Antriebskomponente 16 auf die Abtriebswelle 14 übertragen werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So können beispielsweise anstelle des Federelements 84 die Rückstellmoment erzeugenden Mittel durch eine Zusatzmasse 94 ausgebildet sein (in Figur 2 gestrichelt und schraffiert angedeutet). Dazu wird in den Bremskörper 62 beispielsweise ein Bleigewicht eingelassen sein, welches durch entsprechende Lage auf dem Umfang des ansonsten rotationssymmetrisch ausgebildeten Bremskörpers 62 eine Schwerpunktverlagerung des Bremskörpers 62 außerhalb einer Rotationssymmetrieachse 96 verursacht. Durch die Zusatzmasse 94 wird eine Hebelkraft um die Rotationssymmetrieachse geschaffen. Je nach Gewicht und Lage der Zusatzmasse 94 im Bremskörper 62 wird dadurch ein Rückstellmoment erzeugt, welches den Bremskörper 62 stets in eine vorgebbare Ausgangsstellung drängt, in der der Bremskörper 62 mit seinen Endbereichen 82 an den Führungsnuten 80 mit den Befestigungsbolzen 74 im Anschlag steht. In der in Figur 2 dargestellten Form wird der Bremskörper 62 in eine Anschlagstellung der Endbereiche 82 gedrängt. Durch entsprechende Anordnung der Zusatzmasse 94 auf der entgegen gesetzten Seite des Bremskörpers 62 ist eine Umkehr des Rückstellmoments erzielbar, wodurch dann eine Stellung des Bremskörpers 62 mit Anschlag der Endbereiche 82' an die Befestigungsbolzen 74 bewirkt wird. Auch hier kann demnach die Richtung des Rückstellmoments je nach Anforderung entsprechend gewählt werden.

## Patentansprüche

1. Getriebe (10), insbesondere Zapfwellengetriebe, mit einem Getriebegehäuse (12), einer im Getriebegehäuse (12) gelagerten Welle (14) und einer im Getriebegehäuse (12) angeordneten Bremse (20) zum Bremsen der Welle (14), wobei die Bremse (20) einen ersten auf der Welle (14) axial verschiebbar gelagerten Ringkolben (22) und einen am Getriebegehäuse (12) befestigten und mit einer begrenzten Freilaufeinrichtung versehenen Bremskörper (62) umfasst, **dadurch gekennzeichnet, dass** Mittel vorgesehen sind, durch die ein Rückstellmoment erzeugbar ist, das den Bremskörper (62) gegenüber dem Getriebegehäuse (12) in eine Ausgangsstellung drängt, sobald der Bremskörper (62) innerhalb eines Freilaufs eine von der Ausgangsstellung abweichende Verdrehstellung einnimmt.

2. Getriebe nach Anspruch 1, **dadurch gekennzeichnet, dass** die Mittel wenigstens ein Federelement (84) umfassen, welches den Bremskörper (62) entgegen einer Verdrehbewegung in seine Ausgangsstellung drängt.

3. Getriebe nach Anspruch 2, **dadurch gekennzeichnet, dass** das wenigstens eine Federelement (84) als Torsionsfeder ausgebildet ist, die zwischen dem Bremskörper (62) und dem Getriebegehäuse (12) spannbar ist.

4. Getriebe nach Anspruch 1, **dadurch gekennzeichnet, dass** die Mittel eine am Bremskörper (62) angeordnete Zusatzmasse (94) umfassen, die den Schwerpunkt des Bremskörpers (62) außerhalb einer Rotationssymmetrieachse (96) des Bremskörpers (62) verlagert und derart angeordnet ist, dass ein den Bremskörper (62) in seine Ausgangsstellung drängendes Rückstellmoment wirkt.

## Claims

1. Gearbox (10), in particular power-take-off gearbox, having a gearbox casing (12), a shaft (14) which is mounted in the gearbox casing (12) and a brake (20) which is arranged in the gearbox casing (12) for braking the shaft (14), the brake (20) comprising a first annular piston (22) which is mounted axially displaceably on the shaft (14) and a brake body (62) which is fastened to the gearbox casing (12) and is provided with a limited freewheeling device, **characterized in that** means are provided, by which a restoring moment can be generated which displaces the brake body (62) with respect to the gearbox casing (12) into an initial position, as soon as the brake body (62) assumes a rotational position which differs from the initial position within a freewheel.

2. Gearbox according to Claim 1, **characterized in that** the means comprise at least one spring element (84) which pushes the brake body (62) counter to a rotational movement into its initial position.

3. Gearbox according to Claim 2, **characterized in that** the at least one spring element (84) is configured as a torsion spring which can be stressed between the brake body (62) and the gearbox casing (12).

4. Gearbox according to Claim 1, **characterized in that** the means comprise an additional mass (94) which is arranged on the brake body (62), displaces the centroid of the brake body (62) outside a rotational symmetry axis (96) of the brake body (62) and is arranged in such a way that a restoring moment acts which pushes the brake body (62) into its initial position.

## Revendications

1. Engrenage (10), en particulier engrenage de prise de force, avec un boîtier d'engrenage (12), un arbre (14) monté dans le boîtier d'engrenage (12) et un frein (20) installé dans le boîtier d'engrenage (12) pour le freinage de l'arbre (14), dans lequel le frein (20) comprend un premier piston annulaire (22) monté de façon coulissante axialement sur l'arbre (14) et un corps de freinage (62) fixé au boîtier d'engrenage (12) et muni d'un dispositif à roue libre limité, **caractérisé en ce qu'**il est prévu des moyens permettant de produire un couple de rappel, qui repousse le corps de freinage (62) dans une position initiale par rapport au boîtier d'engrenage (12) dès que le corps de freinage (62) occupe à l'intérieur d'une roue libre une position de rotation différant de la position initiale.

2. Engrenage selon la revendication 1, **caractérisé en ce que** les moyens comprennent au moins un élément de ressort (84), qui repousse le corps de freinage (62) dans sa position initiale à l'opposé d'un mouvement de rotation.

3. Engrenage selon la revendication 2, **caractérisé en ce que** ledit au moins un élément de ressort (84) est réalisé sous la forme d'un ressort de torsion, qui peut être serré entre le corps de freinage (62) et le boîtier d'engrenage (12).

4. Engrenage selon la revendication 1, **caractérisé en ce que** les moyens comprennent une masse additionnelle (94) disposée sur le corps de freinage (62), qui déplace le centre de gravité du corps de freinage (62) à l'extérieur d'un axe de symétrie de révolution (96) du corps de freinage (62) et qui est disposée de telle manière qu'il agisse un couple de rappel repoussant le corps de freinage (62) dans sa position initiale.
